(19) Europäisches Patentamt
European Patent Office
Office européen des brevets

(11) **EP 2 154 649 A1**

(12) **EUROPEAN PATENT APPLICATION**

(43) Date of publication:
**17.02.2010 Bulletin 2010/07**

(51) Int Cl.:
**G06T 1/00** (2006.01)

(21) Application number: **08162423.1**

(22) Date of filing: **14.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Université Catholique de Louvain 1348 Louvain-la-Neuve (BE)**

(72) Inventors:
• **Macq, Benoît**
  **1348 Louvain-la-Neuve (BE)**
• **Callau Uson, Pillar**
  **1060 Bruxelles (BE)**

(74) Representative: **Bird, William Edward et al Bird Goën & Co. Klein Dalenstraat 42A 3020 Winksele (BE)**

(54) **An adaptive watermarking system and method**

(57)     A method and system are disclosed for inserting relationships between or among property values of certain coefficients of a transformed host image. The relationships encode the watermark information. One aspect of the present invention is to modify an STDM ethod to adapt it to a perceptual model simplified for the wavelet domain.

FIG.2

**Description**

FIELD OF THE INVENTION

The present invention relates to systems, methods, devices and controllers for watermarking of images such as still images or video content and in particular to embedding and detecting watermarks. In particular it realtes to computer based systems, methods, devices and controllers for watermarking of images such as still images or video content and in particular to embedding and detecting watermarks.

BACKGROUND OF THE INVENTION

Images such as still images or video frames can be represented in the spatial domain and in a transform domain. In the spatial domain images are represented as a two or more dimensional sequence of sample values x [n1,n2.....] where n1 and n2.... have a finite extent, n1 is less N1 and n2 is less than N2 ..... In two dimensions N1xN2 is sometimes referred to as the resolution of the image. Each value of x is a pixel value. The transform domain representation of a pixelated or fixed format image can be computed from a mathematical transformation of the spatial domain image. This transformation can be reversible, i.e. is lossless or reversible only without loss of information, i.e. is lossy. Well-known transforms the FFT (Fast Fourier Transform), the DCT (Discrete Cosine Transform), which is used in the JPEG compression algorithm, and the DWT (Discrete Wavelet Transform), which is used in the JPEG2000 compression algorithm. A purpose of representing content in a transform domain is that the representation can generally be mader compacter. This can be achieved by quantisation of the coefficients of the transform. Coefficients that are close to zero may be quantised to a zero value thus effectively reducing the number of coefficients required to represent the image.

When the quantised version of the transformed image is inversely transformed the resulting image is different from the original image - hence this procedure is lossy. This difference of the resulting image from the original image can be used to embed a watermark into the difference image in such a way that it is invisible. This embedding can be done by a suitable modification of the coefficients of the transform. The watermark is detectable or becomes visible by suitably inverting the watermark embedding algorithm.

Watennarking technology plays an important role in securing digital media as it allows placing an imperceptible mark in the multimedia data to identify the legitimate owner, track unauthorized users, detect malicious tampering of the document or track illegal copies of the copyrighted material.

Video or video images lend themselves to various watermarking approaches. These approaches to video watermarking can be grouped into three categories, based on whether they select the spatial structure, the temporal structure, or the global three-dimensional structure of a video for watermarking.

In a sequence of imges such as video frames, watermarking algorithms can embed the watermark in each frame or at intervals whereby the interval can be regular or arbitrary. At detection, if every frame has the same watermark pattern, it is sometimes possible to detect the watermark by comparing the images from different frames. On the other hand, if the watermark changes for every image, e.g. in accordance with the image content, it can be harder to detect.

A large number of watermarking methods have been proposed. Watermarking techniques can be distinguished between additive spread spectrum (SS) watermarking methods and quantization-based methods, from which quantization index modulation [1] is the most important technique so far. Chen & Wornell [1] described several variants of QIM as dither modulation and, a special case of it, spread-transform dither modulation (STDM), which links the advantages of spread-spectrum and QIM watermarking.

Image masking models based on the human visual system (HVS) are used to improve perceptual invisibility and robustness of the embedded watermark. Such perceptual analysis identifies frequency bands and/or spatial areas of the image that can withstand more watermark energy without substantially impacting image fidelity. Most of image-adaptive watermarking methods based on QIM are based on adaptively change quantization step size [2][3][4]. Besides controlling the embedding strength by the quantization step size, STDM framework also allows controlling it by adapting the projection vector to the perceptual characteristics of the signal. Recent approaches develop image-adaptive STDM using visual model in DCT domain [5][6] weighting the spread vector according to JND's slacks from Watson's model.

Generally, wavelet-based image watermarking methods exploit the frequency and spatial information in multiple resolutions to gain robustness. However, using a human visual model in the wavelet domain results in a high computational cost. A method of embedding a watermark is disclosed in WO 2007/032760.

A digitally watermarked image can be subject to modifications, e.g. editing such as cropping, scaling, compression, filtering, conversion to other formats, re-sampling, resizing, letterboxing, aperture control, de-interlacing, low-pass filtering and anti-aliasing, de-flickering, brick wall filtering, digital video noise reduction filtering, frame-swapping, compression, overwriting, noise injection, etc. A watermark should ideally be resistant to such transformations. Processes are known to modify images to make sure that certain types of watermark cannot be detected in the modified content.

REFERENCES

[1] B. Chen and G. W. Womell, "Quantization index modulation methods: A class of provably good methods for digital watermarking and information embedding", IEEE Trans. Information Theory, vol. 47, no. 4, pp. 1423-1443, May 2001.
[2] Bao, P., Ma, X.H.: Image adaptive watermarking using wavelet domain singular value decomposition. IEEE Transactions on Circuits and Systems for Video Technology 15(1), 96-102 (2005)
[3] Lee, Y., Lee, K., Kim, S., Won, D., Yang, H.: A method for deciding quantization steps in QIM watermarking schemes. EUC Workshops 2005, LNCS 3823, pp. 965-975, 2005.
[4] Saravan, V., Bora, P., Ghosh, D.: Oblivious image-adaptive watermarking using quantization index modulation. Proc. The Eight National Conf. On Communications, pp. 26-37 (2002)
[5] Li, Q., Doërr, G., Cox, I.J.: Spread Transform Dither Modulation using a perceptual model. IEEE International Workshop on Multimedia Signal Processing(MMSP), Victoria, Canada, Oct. 2006.
[6] Zhu, X.: Image-adaptive spread transform dither modulation using human visual model. Notes in Computer Science, 4456, pp. 913-923, 2007.
[7] Barni, M., Bartolini, F., Piva, A.: Improved Wavelet-Based Watermarking Through Pixel-Wise Masking. IEEE Transactions on Image Processing, 10(5): 783-791, 2001.
[8] Lewis, A.S., Knowles, G.: Image compression using the 2-D wavelet transform. IEEE Trans. Image Processing, vol. 1, pp. 244-250, Apr. 1992.

SUMMARY OF THE INVENTION

An object of the present invention is to provide watermarking that achieves a trade-off among rate, distortion, and robustness or reliability.

An aspect of the present invention involves inserting relationships between or among property values of certain coefficients of a transformed image. The relationships encode the watermark information. One of the advantages of the present invention is to reduce the distortion that the picture suffers when the watermark information is added. One aspect of the present invention is to modify an STDM ethod to adapt it to a perceptual model simplified for the wavelet domain.

A method, system or device for watermarking images according to the present invention includes generating a watermark and embedding the generated watermark into the image date by enforcing relationships between property values of selected sets of coefficients and the embedded watermark image. A method and system for watermarking images according to embodiments of the present invention includes enforcing relationships between property values of selected sets of coefficients of a transform such as a wavelet decomposition of a host image, e.g. by selecting coefficients of the transform and quantising the coefficients, wherein said quantised coefficients replace said selected coefficients to thereby embed said watermark into said image, wherein quantisation of the coefficients is by a spread-transform dither modulation in which the host image signal ($x$) is projected onto a spread vector ($p$) before quantization, different spread vectors ($p$) being used depending upon host image content by selecting the spread vector ($p$) in the direction of least perceptual distortion in accordance with a model of human perception.

In embodiments of the present invention, preferably a higher level or the highest level (i.e. lowest resolution) wavelet coefficients of the host image (i.e. approximation subband) are used to modulate the projection vector used for embedding the watermark in other wavelet coefficients (other resolution sub-bands).

8. A system for watermarking images comprising enforcing relationships between property values of selected sets of coefficients of a host image, the system comprising:

means for selecting coefficients of a transform of the host image,
means for quantising the coefficients,
means for replacing said selected coefficients with said quantised coefficients to thereby embed said watermark into said host image, wherein siad means for quantisation of the coefficients is adapted to perform a spread-transform dither modulation in which the host image signal ($x$) is projected onto a spread vector ($p$) before quantization, different spread vectors ($p$) being used depending upon host image content by selecting the spread vector ($p$) in the direction of least perceptual distortion in accordance with a model of human perception.

9. The system of claim 8, wherein, the transform is a wavelet decomposition of the host image.
10. The system of claim 8 or 9, wherein the selected coefficients are in a level higher than the lowest level of the transform.

11. The system of any of the claims 8 to 10, wherein the projection vector (**p**) is selected based on local brightness levels.

12. The system of claim 11 wherein for a host image (**I**) and its $K$-level discrete wavelet transformation coefficients $(h(i,j),)$ the local brightness of each coefficient $(i, j)$ in each resolution level $l=0. K-1$ based on the grey-level values of the low pass version of the image, $I_K^{LL}$ is computed as:

$$L(l,i,j) = \frac{1}{I_{K\,\max}^{LL}} I_K^{LL}\left(1 + \left\lfloor \frac{i}{2^{K-l}} \right\rfloor, 1 + \left\lfloor \frac{j}{2^{K-l}} \right\rfloor\right),$$

and the local brightness is taken as:

$$L'(l,i,j) = \begin{cases} 1 - L(l,i,j), & \text{if } L(l,i,j) < 0.5 \\ L(l,i,j), & \text{otherwise} \end{cases}.$$

13. The system of any of the claims 8 to 12, wherein a non-linear scaling function is used before the embedding and the corresponding inverse scaling is applied after embedding to put more watermark energy in edges and textured areas.

14. The system of any of the claims 8 to 13 wherein the projection vector (**p**) is a pseudo-random norm-1 projection vector **u**, positive, the embedding function being, with $\mathbf{p_u}(i) = \mathbf{u}(i) \cdot \mathbf{p}(i)$;

$$\mathbf{s} = \mathbf{x} + \frac{\left(Q_m\left(\mathbf{x}^T\mathbf{u}\right) - \mathbf{x}^T\mathbf{u}\right)}{\mathbf{p_u}^T\mathbf{u}}\mathbf{p_u}.$$

The present invention also provides an encoder for watermarking images comprising enforcing relationships between property values of selected sets of coefficients of a host image, the encoder comprising:

means for selecting coefficients of a transform of the host image, means for quantising the coefficients, means for replacing said selected coefficients with said quantised coefficients to thereby embed said watermark into said host image, wherein siad means for quantisation of the coefficients is adapted to perform a spread-transform dither modulation in which the host image signal (**x**) is projected onto a spread vector (**p**) before quantization, different spread vectors (**p**) being used depending upon host image content by selecting the spread vector (**p**) in the direction of least perceptual distortion in accordance with a model of human perception. The transform can be a wavelet decomposition of the host image such as a DWT.

The selected coefficients are preferably in a level higher than the lowest level of the transform. An advantage of not selecting the lowest level is that those coefficients in the lowest level are the most susceptible of disappearing with some common processing such as filtering and compression. Hence the watermark is more robust. The projection vector (**p**) is preferably selected based on local brightness levels. In particular the model of human perception indicates that changes in parts of the image at high or low brightness are less easily recognised.

For a host image (**I**) and its $K$-level discrete wavelet transformation coefficients $(h(i, j),)$ the local brightness of each coefficient $(i, j)$ in each resolution level $l=0.K-1$ is preferably based on the grey-level values of a low pass version of the image. For example, $I_K^{LL}$, can be computed as:

$$L(l,i,j) = \frac{1}{I_{K\,\max}^{LL}} I_K^{LL}\left(1 + \left\lfloor \frac{i}{2^{K-l}} \right\rfloor, 1 + \left\lfloor \frac{j}{2^{K-l}} \right\rfloor\right).$$

The local brightness may be taken as:

$$L'(l,i,j) = \begin{cases} 1 - L(l,i,j), & \text{if } L(l,i,j) < 0.5 \\ L(l,i,j), & \text{otherwise} \end{cases}$$

This makes allowance for the perception of the human visual system.

The encoder can be adapted to perform a non-linear scaling function before the embedding and a corresponding inverse scaling after embedding to put more watermark energy in edges and/or textured areas.

Also the encoder may be adapted to select the projection vector (**p**) as a pseudo-random norm-1 projection vector **u**, positive, the embedding function being, with $\mathbf{p_u}(i) = \mathbf{u}(i) \cdot \mathbf{p}(i)$ :

$$\mathbf{s} = \mathbf{x} + \frac{\left(Q_m\left(\mathbf{x}^T\mathbf{u}\right) - \mathbf{x}^T\mathbf{u}\right)}{\mathbf{p}_u{}^T\mathbf{u}}\mathbf{p_u}.$$

A method and system for detecting watermarks in a host image includes preparing a signal, extracting and calculating property values. In one embodiment a blind decoder is proposed and in another a semi-blind decoder.

The present invention provides a blind decoder comprising:

means for applying a wavelet transform on a received image having a watermark to obtain wavelet coefficients, means for applying non-linear scaling of the wavelet coefficients; means for estimating a projection vector from the received image, the projection vector being estimated from a local luminance of the received image;
means for making a decision on each coefficient based on the projection of the received image onto the spread vector **p**, the means for making a decision comprising a minimum distance detector.

The present invention provides a semi-blind decoder comprising:

means for applying a wavelet transform on a received image having a watermark encoded by an encoder to obtain wavelet coefficients, means for applying non-linear scaling of the wavelet coefficients; means for estimating a projection vector, the projection vector being a pseudo-random norm-1 projection vector **u**, positive and uniformly distributed and shared with the decoder, means for making a decision on each coefficient based on the projection vector, the means for making a decision comprising a minimum distance detector.

The present invention relates to computer based methods and systems. The present invention may be implemented in hardware, in firmware, including FPGAs, ASICs, microprocessors or the like. A hardware solution can be be embedded into a computer or other processing device. The present can also be implemented in software for excution on a processing engine residing in a computer or other form of processing device. The method can be performed by programming the steps and storing the program on computer readable media. A device in accordance with the present invention can be a module for modifying the transform coefficients.

BRIEF DESCRIPTION OF THE DRAWINGS

The present invention is best understood from the following detailed description when read in conjunction with the accompanying drawings. The drawings include the following figures briefly described below where the same reference numbers in the figures represent similar elements:

Fig. 1 is a representation of STDM as can be applied to embodiments of the present invention.
Fig. 2 is a flowchart depicting the watermark embedding operation in accordance with embodiments of the present invention.
Figs. 3a and b are schematic repreentations of a blind (3a) and semi-blind (3b) decoder according to embodiments of the present invention.
Fig. 4 is an exemplary computer system that can be used with the persent invention.

DEFINITIONS

The term "image" is used in the text and claims should be construed widely to include video, still image or audio data or any data represented as a two or more dimensional sequence of sample values x[n1,n2.....] where n1 and n2....

have a finite extent: n1 is less N1 and n2 is less than N2 ...... The term 'content' will be used as a generic term denoting any set of data elements. Generally the relevant content for embedding a watermark is in the transform domain.

"Coefficients" are denoted as the set of data elements, which contain video, still image or audio data.

"Chrominance" (or chroma) refers to the colour portion of image content, which includes the hue and saturation information.

"Hue" refers to the colour tint of an image.

"Saturation" describes the condition where the output colour is constant, regardless of changes in the input parameters.

A "blind" watermarking detection system is one in which the detector does not need access to the original content in order to detect the watermark. There are also so-called semi-blind systems that need access only to data derived from the original content. "Scalar quantisation" refers to mapping each transform sample independently to a corresponding quantisation index such that each quantisation index is associated with an interval on a real line.

A "wavelet" transform is defined as a map of a function s(t) into a two-dimensional domain (the time-scale plane) and is denoted by Ws(a,b) given by:

$$W_S(a,b) = \frac{1}{\sqrt{a}} \int s(t) \, \dot{h}_{ab}(t) \, dt$$

where h(t) is called the mother wavelet and the basis functions of the transform, called daughter wavelets, are given by:

$$h_{ab}(t) = \frac{1}{\sqrt{a}} h\left((t-b)/a\right)$$

where $h_{ab}(t)$ is a set of basis functions obtained from the mother wavelet by compression or dilation using a scaling parameter "a" and a temporal shift parameter "b". Further details can be obtained from "Wavelets and subbands", by A. Abbate, C. M. DeCusatis, P. K. Das, 2002, Birkhäuser, Boston, chapter 2.

DETAILED DESCRIPTION OF THE ILLUSTRATIVE EMBODIMENTS

Embodiments of the present invention will be described in detail with respect to certain drawings but the invention is not limited thereto. For illustrative purposes, most of then drawings are schematic, therefore, the size of the elements are not drawn to scale. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The present invention can be used with wavelet transforms and a wide variety of digital images. In particular the present invention can be used with wavelet transforms with subbands. A useful reference for wavelet transforms is "Wavelets and subbands", by A. Abbate, C. M. DeCusatis, P. K. Das, 2002, Birkhäuser, Boston. The present invention in particular can be used, for example with DWT e.g. as required for JPEG2000 digital images. The DWT of a pixeled image is computed by the successive application of vertical and horizontal, low-pass and high-pass filters to the image pixels, where the resulting values are called 'wavelet coefficients'. A wavelet is an oscillating waveform that persists for only one or a few cycles. At each iteration, the low-pass only filtered wavelet coefficients of the previous iteration are decimated, then go through a low-pass vertical filter and a high-pass vertical filter, and the results of this process are passed through a low-pass horizontal and a high-pass horizontal filter, The resulting set of coefficients is grouped in four 'subbands', namely the LL, LH, HL and HH subbands. A useful reference is JPEG2000, D. Taubman and M. Marcellin, Kluwer Academic Press, 2002.

The LL, LH, HL and HH coefficients are the coefficients resulting from the successive application to the image of, respectively, low-pass vertical/low pass horizontal filters, low-pass vertical/high-pass horizontal filters, high-pass vertical/low-pass horizontal filters, high-pass vertical/high-pass horizontal filter.

Each iteration corresponds to a certain 'layer' or 'level' of coefficients. The first layer of coefficients corresponds to the highest resolution level of the image, while the last layer corresponds to the lowest resolution level.

An image may have a number of channels (or components), that correspond to different native colours. If the image is in grayscale, then it has only one channel representing the luminance component. In general, the image is in colour, in which case three or four channels are typically used to represent the different colour. The three channels may respectively represent the red, green and blue component, in which case the image is represented in the RGB colour space, however, many other colour spaces can be used. In addition black may be included or other primary colours may be used. If the image has multiple channels, the DWT is generally computed separately on each colour channel. A digital image is usually represented with multiple separate components (or channels) such as RGB (red/green/blue, widely used in computer graphics and colour television), YIQ, YUV and YCrCb (used in broadcast and television), CMYK (used in printing).

A watermark embedded in an image according to the present invention can be made robust to various types of post-embedding operations, while simultaneously minimizing perceptual impact on the image. Most of image-adaptive watermarking methods based on quantization index modulation are based on adaptively change quantization step size. However, the present invention makes use of spread-transform dither modulation (STDM).

In accordance with embodiments of the present invention a perceptual model is used within an STDM framework to improve robustness and fidelity without increasing computational cost. In embodiments, wavelet-based image watermarking methods exploit the frequency and spatial information in multiple resolutions to gain robustness without suffering from high computational cost. The spread vector is adapted based on the perceptual properties of the image and host coefficients are pre-processed to direct more changes in coefficients supporting more distortion. Embodiments of the present invention use an image-adaptive STDM watermarking technique in wavelet domain that offers any one of or any combination of robustness, imperceptibility and computational simplicity. The watermark information is inserted by enforcing relationships between quantised values of selected sets of coefficients and a watermark image. However, as the human eye is much less sensitive to the overall intensity (luminance) changes than to colour (chrominance) changes, a watermark is preferably embedded in the luminance component of an image. Another advantage of luminance is that it is more invariant to transformations of the image.

Preferably the properties should be 'invariant'. The present invention is best practiced using invariant properties, but it can be practiced using properties that are not invariant. For example, the average luminance value of a frame is considered 'invariant' over time: it varies generally in a slow, monotonic way (except at boundary shots); furthermore, an attack such as contrast enhancement will generally respect the relative ordering of each frame's luminance value.

To encode bits of information, certain coefficients of an image/video are selected and quantised in a way in order to introduce a relationship between the property values of the coefficients and the watermark. Sets of coefficients have different property values, which generally vary in different spatio-temporal regions of an image, or are modified after processing the content. To insert the watermark information, a number of relationships can be enforced by varying the way that certain coefficient values in certain sets of coefficients are quantised. A relationship is to be understood in a non-limiting way, as one or a set of conditions that one or more property values of one or more sets of coefficients must satisfy.

The properties are calculated in the transform domain, and are referred to as the energy in a frequency band or level. For the wavelet transform there are four sets of wavelet coefficients (LL, LH, HL and HH) corresponding to the four subbands for each position and each component (channel) at each resolution level for each frame.

Host image generation includes translating the concrete information to be embedded into a sequence of bits. The host image can be encoded for error correction and detection.

The present invention uses spread spectrum watermarking methods that take account of the original host image content to determine how the coefficients are quantised.

The basic idea of quantization index modulation (QIM) is the quantization of a signal sample using a quantizer chosen from a set of quantizers based on the message bit. Usually, quantizers are dithered quantizers and the embedded bit modulates the dither signal.

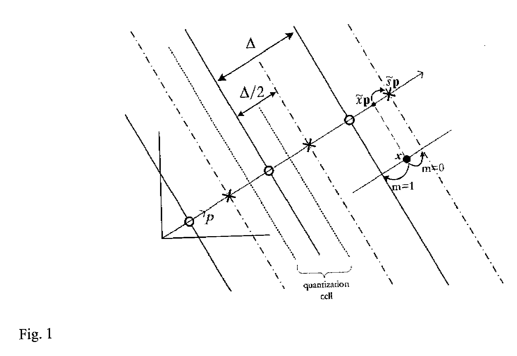

Spread-transform dither modulation (STDM) is a special case of QIM in which the host signal $\mathbf{x} \in R^L$ is projected onto a randomly generated spread vector $\mathbf{p} \in R^L$ before quantization (see Fig.1). The embedding occurs entirely in the projection of the host signal $\mathbf{x}$ onto the unit-length vector $\mathbf{p}$, $\mathbf{x}^T\mathbf{p}$. Thereby, the problem is reduced to a one-dimensional problem and one bit of information is embedded in the projection $\mathbf{x}^T\mathbf{p}$ by quantizing it with a uniform, scalar, dithered quantizer of step size $\Delta$. Thus, the projection of the watermarked signal $\mathbf{s}$ onto $\mathbf{p}$ is:

$$\mathbf{s}^T\mathbf{p} = Q_m\left(\mathbf{x}^T\mathbf{p}\right) = Q\left(\mathbf{x}^T\mathbf{p} + d_m\right) - d_m, \qquad m = 0,1$$

where $d_m$ represents the dither value modulated by the information bit embedded. The distortion due to the embedding in the transform space, $Q_m(\mathbf{x}^T\mathbf{p})-\mathbf{x}^T\mathbf{p}$, is then projected onto p to shift the transformation components back and generate the overall watermarked signal:

$$\mathbf{s} = \mathbf{x} + \left(Q_m\left(\mathbf{x}^T\mathbf{p}\right) - \mathbf{x}^T\mathbf{p}\right)\mathbf{p}, \qquad m = 0,1 \qquad (1)$$

The decoder makes a decision based on the projection of the channel output y onto the spread vector **p**. Perturbations of the watermarked signal are modelled as a generic channel noise **n**, so **y=s+n**. The detection is then defined as a minimum distance decoder, its simpler form is

$$\hat{m} = \arg\min_{m=0,1}\left|\mathbf{y}^T\mathbf{p} - Q_m\left(\mathbf{y}^T\mathbf{p}\right)\right|, \qquad m = 0,1 \qquad (2)$$

Bami et al. [7] proposed a masking model in wavelet domain as an adaptation of Lewis and Knowles's [8] method to evaluate the optimum quantization step for each DWT coefficient according to psycho-visual considerations. Barni et al. use this adapted model to compute the maximum visibly tolerable watermark energy that can be used for each DWT coefficient.

In spread transform dither modulation the alteration introduced to each DWT coefficient is initially controlled by the quantization error. From Eq. (1) it can be seen that a change that has occurred to the host signal vector **x** is in the direction of the uniformly distributed random spread vector **p**. Embodiments of the present invention include a visual model in this framework by implementing **p** in the direction of least perceptual distortion.

Separate embodiments of the present invention make use of wavelet transform properties.

1. In a first embodiment use is made of the fact that the human eye is less sensitive to noise in high resolution bands, and in diagonal bands. Hence changes can be made in these regions of the image and the viewer will not see the effect of the embedded watermark.

2. In a second embodiment, changes in high or low brightness areas of the image are less perceptible. Hence the coefficients will be changed more in the high and low brightness areas.

3. In a third embodiment use is made of the fact that the eye is less sensitive to noise in highly textured areas but, among these, more sensitive near the edges. Hence the coefficients are changed in highly textured areas.

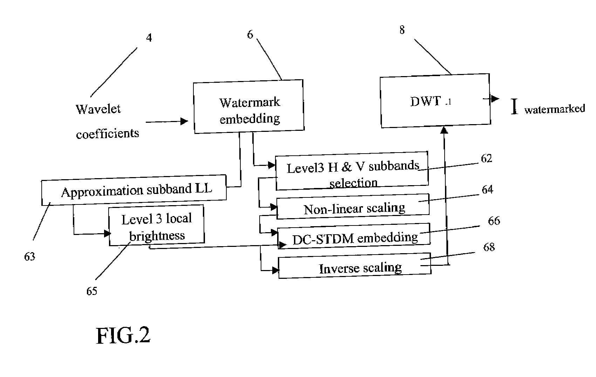

Any combination of two or three of the above embodiments is included within the scope of the present invention. The embodiments of the present invention will be described with reference to Fig. 2.

With respect to the first embodiment, tests were made on a 5-level wavelet decomposition of the images. Watermark embedding was tested in all different levels. 3rd. level coefficient-embedding was chosen to further analyse robustness and invisibility. Using the highest resolutions can suffer from a lack of robustness to some kinds of common image processing operations while lowest resolution embedding could increase the visibility of the mark. Hence mid-level is preferred, e.g. to change coefficients in the third level as shown in Fig. 2.

The second embodiment is implemented by how the projection vector **p** is chosen. The vector **p** is preferably chosen so that when brightness is very high or low at that position in the image, the coefficients of the wavelet transform are changed more by the quantisation step - the quantisation steps can be made bigger or can be made to alter in value by a greater amount. This is done depending upon local brightness of the pixels, e.g. by selecting the level 3 local brightness, and quantises these level three coefficients.

For example, given an image **I** and its $K$-level discrete wavelet transformation coefficients $h(i, j)$, the local brightness of each coefficient $(i, j)$ in each resolution level $l=0..K-1$ based on the grey-level values of the low pass version of the image, $I_K^{LL}$ is computed as:

$$L(l,i,j) = \frac{1}{I_{K\,max}^{LL}}\, I_K^{LL}\left(1 + \left\lfloor\frac{i}{2^{K-l}}\right\rfloor, 1 + \left\lfloor\frac{j}{2^{K-l}}\right\rfloor\right) \qquad (3)$$

As the human eye is less sensitive to lower brightness as well, the following expressions can be considered in the second embodiment:

$$L'(l,i,j) = \begin{cases} 1 - L(l,i,j), & \text{if } L(l,i,j) < 0.5 \\ L(l,i,j), & \text{otherwise} \end{cases} \qquad (4)$$

to indicate the capacity of the corresponding DWT coefficient to support changes based on perceptual properties. The larger the value of $L'(l,i,j)$, the more the change to the corresponding DWT coefficient before the change becomes noticeable.

Image-adaptive STDM in wavelet domain proposed assigns to the corresponding projection vector **p** the values computed by Eq. (3) and Eq. (4) for each coefficient in the host vector. Note that the projection vector **p** is now a function of the host vector, it is variable for each bit embedded. This makes it resistant to many types of attacks.

In accordance with the third embodiment, edge and texture activity is identified and this may need the analysis of several sub-bands, what may increase computational complexity of the watermarking method. To exploit edges and textures sensitivity, a non-linear scaling function is used in accordance with the third embodiment before the embedding and the corresponding inverse scaling is applied after embedding to put more watermark energy in edges and textured areas. Host vectors are composed of scaled coefficients as:

$$x(i,j) = sign(h(i,j)) \cdot |h(i,j)|^{\beta}, \qquad \beta \leq 1 \qquad (5)$$

The combination of the three embodiments is shown schematically in Fig. 2. At step 4 the wavelet coefficients are generated, e.g. DWT coefficients, from the host image. The subsquent quantisation step includes the embedding of the watermark in step 6.

Step 6 comprises the step 62 of selecting coefficients from a level higher than the maximum resolution level, e.g. from level 3, and also preferably at a lower level than the highest level used in the transform, e.g. less than level 5. Step 64 comprises a non-linear scaling to exploit edges and textures sensitivity as described above with reference to Eq. 5. In steps 63 and 65 subband LL is approximated in the higher level, e.g, level 3 and the local brightness is calculated as indicated above with respect to Eq. (3) and (4)). These brightness values are used in the STDM embedding step 66. The inverse non-linear scaling function is applied in step 68 and the modified image data is then output.

In step 8 the output is subjected to an inverse wavelet transform such as a DWT$^{-1}$ in order to restore an image that is output having the watermark embedded in an invisible and resistant manner.

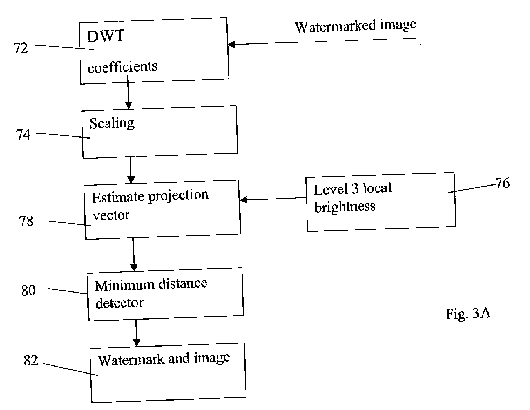

A blind detector (sometimes called a blind decoder) is shown schematically in Fig. 3a. The detector includes means 72 for applying a wavelet transform, e.g. the wavelet transform such as a DWT that is the forward transform of the transform of step 8 of fig. 2, to obtain the wavelet coefficients. The detector also includes optionally means 74 for applying a non-linear scaling step which is for example, the inverse of the inverse non-linear scaling of step 68 of Fig. 2. With this, the blind watermark detector performs the scaling of the coefficients. Next the detector has means 78 for estimating, recomputed, the projection vector from the received, watermarked signal. The projection vector is estimated from the local luminance computation of the received image, e.g. of a level other than the lowest or highest level, e.g. level 3 which is output by a means 76 for determining local luminance. The decoder makes a decision based on the projection of the channel output y (= the image with the watermark) onto the spread vector **p**. The relevant embedding function is Eq.(1). The detection is preferably performed with a minimum distance detector 80 from Eq. (2). Finally the watermark is output, e.g, as the image with the watermark visible and displayed in a display means 72.

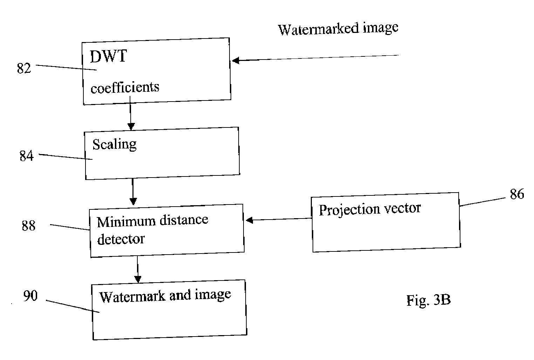

As watermark embedding, and channel noise, alter the image, the estimation of the projection vector from the local luminance computation of the received image may not be exact. To overcome this possible inexactitude, a detector according to another embodiment is a semi-blind detector and does not require local luminance computation in order to decode the watermark information. A semi-blind detector (sometimes called a semi-blind decoder) is shown schematically in Fig. 3b. The detector includes means 82 for applying a wavelet transform, e.g. the wavelet transform such as a DWT that is the forward transform of the transform of step 8 of fig. 2, to obtain the wavelet coefficients. The detector also includes optionally means 84 for applying a non-linear scaling step which is for example, the inverse of the inverse non-linear scaling of step 68 of Fig. 2. With this, the semi-blind watermark detector performs the scaling of the coefficients. This embodiment modifies the embedding function and uses, as can be used in basic STDM, a pseudo-random norm-1 projection vector **u**, positive and uniformly distributed shared with the decoder. The embedding function is now, with $\mathbf{p_u}(i) = \mathbf{u}(i) \cdot \mathbf{p}(i)$:

$$\mathbf{s} = \mathbf{x} + \frac{\left(Q_m\left(\mathbf{x}^T\mathbf{u}\right) - \mathbf{x}^T\mathbf{u}\right)}{\mathbf{p}_v^{\;T}\mathbf{u}}\mathbf{p}_u \qquad (6)$$

In this embodiment the final projection vector used is $\mathbf{p_u}(i) = \mathbf{u}(i)\cdot\mathbf{p}(i)$ where $\mathbf{u}(i)$ is the pseudo-random norm-1 vector that is shared with the decoder (= semi-blind detector), and p(i) is the projection vector as defined above with respect to the local brightness values. In this embodiment the embedding function is given by Eq. (6). The decoder shown schematically in Fig. 3b performs the scaling of the coefficients and uses the same minimum distance detector 80 from Eq. (2) but instead of using the vector **p**, it uses vector **u** (e.g. obtained from memory 86). That way, the local brightness must not be computed: the possible inexactitude resulting from possible alterations the watermarked image may have suffered is prevented and computational complexity of the decoder is less. It also displays the image plus watermark on a display 90.

It is to be understood that the present invention may be implemented in various forms of hardware (e.g. ASIC chip), software, firmware, special purpose processors, or a combination thereof, for example, within a server or mobile device. Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

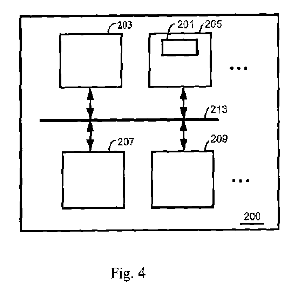

The above-described method embodiments of the present invention may be implemented in a processing system 200 such as shown in Fig. 4 either encoding of decoding. Fig. 4 shows one configuration of processing system 200 that can be implemented on a mobile phone, a PDA, a laptop, a personal computer, a server, etc. It includes at least one programmable processor 203 coupled to a memory subsystem 205 that includes at least one form of memory, e.g., RAM, ROM, and so forth. It is to be noted that the processor 203 or processors may be a general purpose, or a special purpose processor, may be embedded and may be for inclusion in a device, e.g., a chip that has other components that perform other functions. The processor may also be an FPGA or other programmable logic device. Thus, one or more aspects of the present invention can be implemented in digital electronic circuitry, or in computer hardware, firmware, software, or in combinations of them. The processing system may include a storage subsystem 207 that has at least one disk drive and/or CD-ROM drive and/or DVD drive. In some implementations, a display system, a keyboard, and a pointing device may be included as part of a user interface subsystem 209 to provide for a user to manually input information. Ports for inputting and outputting data also may be included, especially interfaces for one or more microphones for capturing sound signals from organisms such as mammals, especially for capturing cough events. Further interfaces may be provided for coupling image capturing devices to the computer system, e.g. for connection to a digital camera or cameras, e.g. a video camera. More elements such as network connections, interfaces to various devices, and so forth, may be included, either by wireline or wireless connections, but are not illustrated in Fig. 4. The various elements of the processing system 200 may be coupled in various ways, including via a bus subsystem 213 shown in Fig. 4 for simplicity as a single bus, but will be understood to those in the art to include a system of at least one bus. The memory of the memory subsystem 205 may at some time hold part or all (in either case shown as 201) of a set of instructions that when executed on the processing system 200 implement the steps of the method embodiments described herein. Thus, while a processing system 200 such as shown in Fig. 4 is prior art, a system that includes the instructions to implement aspects of the methods for characterising a sample fluid is not prior art, and therefore Fig. 4 is not labelled as prior art.

The present invention also includes a computer program product, which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method for watermarking images comprising enforcing relationships between property values of selected sets of coefficients of a host image, the method compirising: selecting coefficients of a transform of the host image and quantising the coefficients, wherein said quantised coefficients replace said selected coefficients to thereby embed said watermark into said image, wherein quantisation of the coefficients is by a spread-transform dither modulation in which the host image signal (x) is projected onto a spread vector (p) before quantization, different spread vectors (p) being used depending upon host image content by selecting the spread vector (p) in the direction of least perceptual distortion in accordance with a model of human perception.

2. The method of claim 1 wherein the transform is a wavelet decomposition of the host image.

3. The method of claim 1 or 2, wherein the selected coefficients are in a level higher than the lowest level of the transform.

4. The method of any previous claim wherein the projection vector (p) is selected based on local brightness levels.

5. The method of claim 4 wherein for a host image (**I**) and its $K$-level discrete wavelet transformation coefficients ($h(i, j)$,) the local brightness of each coefficient ($i, j$) in each resolution level $l=0..K$-1 based on the grey-level values of the low pass version of the image, $I_K^{LL}$ is computed as:

$$L(l,i,j) = \frac{1}{I_{K\max}^{LL}} I_K^{LL}\left(1 + \left\lfloor\frac{i}{2^{K-l}}\right\rfloor, 1 + \left\lfloor\frac{j}{2^{K-l}}\right\rfloor\right),$$

and the local brightness is taken as:

$$L'(l,i,j) = \begin{cases} 1 - L(l,i,j), & \text{if } L(l,i,j) < 0.5 \\ L(l,i,j), & \text{otherwise} \end{cases}.$$

6. The method of any previous claim wherein a non-linear scaling function is used before the embedding and the corresponding inverse scaling is applied after embedding to put more watermark energy in edges and textured areas.

7. The method of any previous claim wherein the projection vector (**p**) is a pseudo-random norm-1 projection vector **u**, positive, the embedding function being, with $\mathbf{p_u}(i) = \mathbf{u}(t) \cdot \mathbf{p}(i)$:

$$\mathbf{s} = \mathbf{x} + \frac{\left(Q_m\left(\mathbf{x}^T\mathbf{u}\right) - \mathbf{x}^T\mathbf{u}\right)}{\mathbf{p_u}^T\mathbf{u}}\mathbf{p_u}$$

8. An encoder for watermarking images comprising enforcing relationships between property values of selected sets of coefficients of a host image, the encoder comprising: means for selecting coefficients of a transform of the host image,

means for quantising the coefficients,
means for replacing said selected coefficients with said quantised coefficients to thereby embed said watermark into said host image, wherein siad means for quantisation of the
coefficients is adapted to perform a spread-transform dither modulation in which the host image signal (**x**) is projected onto a spread vector (**p**) before quantization, different spread vectors (**p**) being used depending upon host image content by selecting the spread vector (**p**) in the direction of least perceptual distortion in accordance with a model of human perception.

9. The encoder according to claim 8, wherein the transform is a wavelet decomposition of the host image, optionally being a DWT and the selected coefficients are optionally in a level higher than the lowest level of the transform.

10. The encoder of claim 8 or 9, wherein the projection vector (**p**) is selected based on local brightness levels and optionally for a host image (**I**) and its $K$-level discrete wavelet transformation coefficients ($h(i,j),$) the local brightness of each coefficient ($i,j$) in each resolution level $l=0..K-1$ is based on the grey-level values of a low pass version of the image and optionally the local brightness of each coefficient ($i,j$) in each resolution level $l=0..K-1$ is computed as:

$$L(l,i,j) = \frac{1}{I_{K\,max}^{LL}} I_K^{LL}\left(1+\left\lfloor\frac{i}{2^{K-l}}\right\rfloor, 1+\left\lfloor\frac{j}{2^{K-l}}\right\rfloor\right) \cdot$$

and optionally the local brightness is:

$$L'(l,i,j) = \begin{cases} 1-L(l,i,j), & \text{if } L(l,i,j) < 0.5 \\ L(l,i,j), & otherwise \end{cases}$$

11. The encoder according to any of the claims 8 to 10, adapted to perform a non-linear scaling function before the embedding and a corresponding inverse scaling after embedding to put more watermark energy in edges and/or textured areas.

12. The encoder according to any of the claims 8 to 11, adapted to select the projection vector (**p**) as a pseudo-random norm-1 projection vector **u**, positive, the embedding function being, with $\mathbf{p_u}(i) = \mathbf{u}(i)\cdot\mathbf{p}(i)$:

$$\mathbf{s} = \mathbf{x} + \frac{\left(Q_m\left(\mathbf{x}^T\mathbf{u}\right)-\mathbf{x}^T\mathbf{u}\right)}{\mathbf{p_u}^T\mathbf{u}}\mathbf{p_u} \cdot$$

13. A computer program product to implement any of the methods of claims 1 to 7 or to or to implement an encoder according to any of the claims 8 to 12.

14. A blind decoder comprising:

means for applying a wavelet transform on a received image having a watermark to obtain wavelet coefficients,
means for applying non-linear scaling of the wavelet coefficients;
means for estimating a projection vector from the received image, the projection vector being estimated from a local luminance of the received image;
means for making a decision on each coefficient based on the projection of the received image onto the spread vector **p**, the means for making a decision comprising a minimum distance detector.

15. A semi-blind decoder comprising:

means for applying a wavelet transform on a received image to obtain wavelet coefficients, the received having a watermark encoded by an encoder according to the embedding function of claim 7,
means for applying non-linear scaling of the wavelet coefficients;
means for estimating a projection vector, the projection vector being a pseudo-random norm-1 projection vector **u**, positive and uniformly distributed and shared with the decoder,
means for making a decision on each coefficient based on the projection vector, the means for making a decision comprising a minimum distance detector.

Fig. 1

FIG.2

EP 2 154 649 A1

Watermarked image

Level 3 local brightness

76

DWT coefficients

72

Scaling

74

Estimate projection vector

78

Minimum distance detector

80

Watermark and image

82

Fig. 3A

16

EP 2 154 649 A1

Watermarked image

DWT coefficients

82

Scaling

84

Minimum distance detector

88

Projection vector

86

Watermark and image

90

Fig. 3B

17

Fig. 4

EP 2 154 649 A1

**EUROPEAN SEARCH REPORT**

Application Number

EP 08 16 2423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | QIAO LI ET AL: "Spread Transform Dither Modulation using a Perceptual Model" MULTIMEDIA SIGNAL PROCESSING, 2006 IEEE 8TH WORKSHOP ON, IEEE, PI, 1 October 2006 (2006-10-01), pages 98-102, XP031011028 ISBN: 978-0-7803-9751-4 * abstract * | 1,6-8, 11-13 | INV. G06T1/00 |
| Y | * page 98, paragraph I - page 100, paragraph III * | 2-5,9, 10,14,15 | |
| X,D | XINSHAN ZHU ED - YUPING WANG ET AL: "Image-Adaptive Spread Transform Dither Modulation Using Human Visual Model" 2007, COMPUTATIONAL INTELLIGENCE AND SECURITY; [LECTURE NOTES IN COMPUTER SCIENCE], PAGE(S) 913 - 923 , XP019098221 ISBN: 978-3-540-74376-7 * abstract * * pages 914-916, paragraphs 2,3 * * page 919, lines 5-15 * | 1,8,13 | |
| | | | TECHNICAL FIELDS SEARCHED (IPC) |
| | | | G06T |
| X,D | BRIAN CHEN ET AL: "Quantization Index Modulation: A Class of Provably Good Methods for Digital Watermarking and Information Embedding" IEEE TRANSACTIONS ON INFORMATION THEORY, IEEE, US, vol. 47, no. 4, 1 May 2001 (2001-05-01), XP011027937 ISSN: 0018-9448 * abstract * * page 1424, left-hand column, line 33 - page 1425, left-hand column, line 23 * * page 1429, left-hand column, line 3 - page 1431, left-hand column, line 8 * | 1,8,13 | |

-/--

The present search report has been drawn up for all claims

| Place of search | Date of completion of the search | Examiner |
|---|---|---|
| Munich | 16 February 2009 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 16 2423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PEREZ-GONZALEZ F ET AL: "Improving data riding performance by using quantization in a projected domain" MULTIMEDIA AND EXPO, 2002. ICME '02. PROCEEDINGS. 2002 IEEE INTERNATIO NAL CONFERENCE ON LAUSANNE, SWITZERLAND 26-29 AUG. 2002, PISCATAWAY, NJ, USA, IEEE, US, vol. 1, 26 August 2002 (2002-08-26), pages 565-568, XP010604431 ISBN: 978-0-7803-7304-4 * page 565, paragraph 1 - page 566, paragraph 2.1 * | 1,8,13 | |
| Y,D | BARNI M ET AL: "IMPROVED WAVELET-BASED WATERMARKING THROUGH PIXEL-WISE MASKING" IEEE TRANSACTIONS ON IMAGE PROCESSING, IEEE SERVICE CENTER, PISCATAWAY, NJ, US, vol. 10, no. 5, 1 May 2001 (2001-05-01), pages 783-791, XP001174190 ISSN: 1057-7149 * abstract * * page 783, paragraph I - page 786, paragraph III * | 2-5,9, 10,14,15 | |
| Y | COX I J ET AL: "Digital Watermarking - ch. Using Perceptual Models" 1 January 2002 (2002-01-01), DIGITAL WATERMARKING; [SERIES IN MULTIMEDIA INFORMATION AND SYSTEMS], SAN FRANCISCO, CA : MORGAN KAUFMANN, US, PAGES 201-240 , XP002513478 ISBN: 978-1-55860-714-5 * pages 215-218, paragraph 7.3.1 * * page 222, paragraph 7.4 - page 227, line 15 * * page 232, paragraph 7.4.2 - page 236, line 4 * | 2,4,9, 10,14,15 | |

TECHNICAL FIELDS
SEARCHED (IPC)

The present search report has been drawn up for all claims

| Place of search | Date of completion of the search | Examiner |
|---|---|---|
| Munich | 16 February 2009 | Zamuner, Umberto |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007032760 A

### Non-patent literature cited in the description

- **B. Chen ; G. W. Wornell.** Quantization index modulation methods: A class of provably good methods for digital watermarking and information embedding. *IEEE Trans. Information Theory,* May 2001, vol. 47 (4), 1423-1443
- **Bao, P. ; Ma, X.H.** Image adaptive watermarking using wavelet domain singular value decomposition. *IEEE Transactions on Circuits and Systems for Video Technology,* 2005, vol. 15 (1), 96-102
- **Lee, Y. ; Lee, K. ; Kim, S. ; Won, D. ; Yang, H.** A method for deciding quantization steps in QIM watermarking schemes. *EUC Workshops 2005, LNCS,* 2005, vol. 3823, 965-975
- **Saravan, V. ; Bora, P. ; Ghosh, D.** Oblivious image-adaptive watermarking using quantization index modulation. *Proc. The Eight National Conf. On Communications,* 2002, 26-37
- **Li, Q. ; Doërr, G. ; Cox, I.J.** Spread Transform Dither Modulation using a perceptual model. *IEEE International Workshop on Multimedia Signal Processing(MMSP),* October 2006
- **Zhu, X.** Image-adaptive spread transform dither modulation using human visual model. *Notes in Computer Science,* 2007, vol. 4456, 913-923
- **Barni, M. ; Bartolini, F. ; Piva, A.** Improved Wavelet-Based Watermarking Through Pixel-Wise Masking. *IEEE Transactions on Image Processing,* 2001, vol. 10 (5), 783-791
- **Lewis, A.S. ; Knowles, G.** Image compression using the 2-D wavelet transform. *IEEE Trans. Image Processing,* April 1992, vol. 1, 244-250
- **A. Abbate ; C. M. DeCusatis ; P. K. Das.** Wavelets and subbands. Birkhäuser, 2002
- **D. Taubman ; M. Marcellin.** JPEG2000. Kluwer Academic Press, 2002